# FASCICULE DE BREVET EUROPEEN

(11) **EP 2 577 350 B1**
(45) Date de publication et mention de la délivrance du brevet: **12.03.2014**
(21) Numéro de dépôt: 11726907.6
(22) Date de dépôt: 26.05.2011
(51) Int. Cl.: G01T 1/178

(54) **DISPOSITIF DE DÉTECTION DE PARTICULES ALPHA**
VORRICHTUNG FÜR DEN NACHWEIS VON ALPHA-PARTIKELN
ALPHA-PARTICLE DETECTION DEVICE

(30) Priorité: 03.06.2010 FR 1054352
(43) Date de publication de la demande: 10.04.2013
(73) Titulaire: Jean, Grégory, 14000 Caen (FR)
(72) Inventeur: Jean, Grégory, 14000 Caen (FR)
(74) Mandataire: Cabinet HERRBURGER
(86) Numéro de dépôt international: PCT/FR2011/051204
(87) Numéro de publication internationale: WO 2011/151575

(56) Documents cités:
- FR-A1- 2 919 394
- US-A- 5 319 208
- US-A- 5 489 780

## Description

La présente invention concerne un dispositif de détection de particules alpha dans l'atmosphère.

Le radon est un gaz rare d'origine naturelle qui constitue une source naturelle de radioactivité. Il est donc important de pouvoir détecter la présence de ce gaz dans l'atmosphère comme par exemple dans un espace confiné comme la pièce d'une habitation.

Le radon émet des particules alpha qui peuvent être détectées par un capteur approprié.

Différents dispositifs de détection ont déjà été proposés mais aucun d'eux ne donne pleinement satisfaction.

Par exemple, il peut s'agir de dispositifs passifs (dosimètres à film à matériaux sensibles ou charbon) ou de dispositifs actifs (chambre d'ionisation). Ces dispositifs sont souvent encombrants et ne sont pas facilement utilisables dans une habitation.

D'autres dispositifs de détection utilisent une implémentation électronique qui ne permet pas de détecter l'ensemble des particules alpha et, en particulier, les particules alpha à basse énergie d'interaction ainsi que les particules alpha qui ont eu un parcourt dans l'air de plusieurs centimètres et perdu de l'énergie. FR 291939A divulgue un détecteur de particules alpha selon le préambule de la revendication 1.

Un objet de la présente invention est de proposer un dispositif de détection du radon qui ne présente pas les inconvénients de l'art antérieur et qui en particulier permet une détection plus fine que celle effectuée par les dispositifs de détection de l'état de la technique.

A cet effet, est proposé un dispositif de détection de particules alpha, par exemple issues du radon, comprenant un circuit électronique lui-même comprenant :
- au moins une cellule de détection et de conversion, la ou chaque cellule de détection et de conversion comprenant:
- une diode en polarisation directe avec sa couche N à la masse, et
- un circuit de conversion du type convertisseur charge-tension dont l'entrée est électriquement connectée à la couche P de la diode et qui est prévu pour récupérer la charge émise par la diode et pour convertir cette charge en une tension représentative,
- un circuit d'amplification à l'entrée duquel est électriquement connectée en parallèle la sortie du ou de chaque circuit de conversion,
- un circuit de comparaison prévu pour comparer la valeur de la tension en sortie du circuit d'amplification avec une valeur seuil, et
- un circuit de commande prévu pour commander un dispositif de protection, en réponse à un dépassement de la valeur seuil par la valeur de la tension.

Avantageusement, la ou chaque cellule de détection et de conversion comprend en outre un condensateur d'entrée intercalé entre la couche P de la diode et le circuit de conversion associé.

Avantageusement, la ou chaque cellule de détection et de conversion comprend en outre un condensateur de sortie intercalé entre le circuit de conversion et le circuit d'amplification.

Avantageusement, le ou chaque circuit de conversion comprend :
- un transistor à effet de champ en auto polarisation dont la grille est électriquement connectée au condensateur d'entrée et dont le drain est électriquement connecté au condensateur de sortie,
- une résistance d'entrée électriquement connectée entre la masse et la grille du transistor,
- une résistance de source qui est électriquement connectée entre la masse et la source du transistor,
- un condensateur de source branché en parallèle avec la résistance de source,
- une résistance de drain électriquement connectée entre une source de tension et le drain du transistor.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la figure 1 représente un circuit électronique d'un dispositif de détection de particules alpha selon un premier mode de réalisation de l'invention, et
la figure 2 représente un circuit électronique d'un dispositif de détection de particules alpha selon un deuxième mode de réalisation de l'invention.

Une particule alpha interagit avec la couche P d'une diode. A cette fin, différents types de diodes peuvent être utilisés, on citera par exemple: les diodes dites "planar diffusion", les diodes dites "low-capacitance planar diffusion", les diodes PN, les diodes PNN+, ou les diodes PIN...

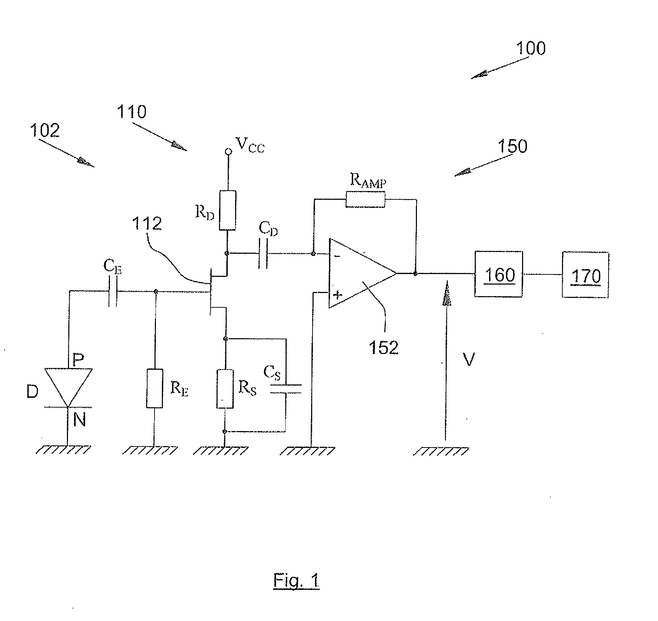

La figure 1 montre un circuit électronique 100 d'un dispositif de détection qui comporte une cellule de détection et de conversion 102. Le dispositif de détection permet de détecter les particules alpha qui sont par exemple issues du radon.

La cellule de détection et de conversion 102 comporte une telle diode D qui est en polarisation directe et qui n'est donc soumise à aucun courant ou tension de polarisation.

La couche P de la diode D est orientée vers l'air dans lequel le radon doit être détecté et la couche N est reliée à la masse.

La cellule de détection et de conversion 102 comporte également un circuit de conversion 110 du type convertisseur charge-tension qui est prévu pour récupérer la charge émise par la diode D - lors de la captation d'une particule alpha par la diode D - et pour convertir cette charge en une tension représentative.

La couche P de la diode D est électriquement connectée à l'entrée du circuit de conversion 110.

Cette tension représentative est ensuite amplifiée en une tension V par un circuit d'amplification 150 qui est électriquement connecté à la sortie du circuit de conversion 110.

Le circuit électronique 100 comporte également un circuit de comparaison 160 qui compare la valeur de la tension V en sortie du circuit d'amplification 150 avec une valeur seuil.

Le dispositif de détection comporte également un circuit de commande 170 qui, en réponse à un dépassement de la valeur seuil par la valeur de la tension V détectée par le circuit de comparaison 160, commande un dispositif de protection qui peut prendre la forme d'une alarme sonore et/ou lumineuse, et/ou d'un système de ventilation destiné à évacuer le radon présent dans l'atmosphère.

La zone d'interaction entre les particules alpha et la diode D est placée dans la couche P. Cette zone d'interaction appelée "zone de déplétion" est obtenue en fonction de la polarisation de la diode D. Et comme aucune tension, aucun courant et aucun champ électrique n'est appliqué sur la diode D, seule la couche P est sensible à la présence des particules alpha.

La couche P est très fine de l'ordre de 10 µm, et ainsi seules les particules alpha émises par le radon qui ont un libre parcours moyen assez court (environ 8µm dans le silicium) interagissent avec la couche P.

En outre, cette zone d'interaction est limitée, ce qui permet de réduire la sensibilité aux éléments radioactifs qui se déposent sur la couche P de la diode D et qui peuvent émettre des particules alpha. Ainsi, les perturbations, créées par la contamination naturelle du détecteur (par les produits de fission du Radon par exemple), sont sensiblement moins importantes que dans le cas des dispositifs de détection de l'état de la technique.

En outre, en dépolarisant la diode D, il est possible de la connecter électriquement en direct, c'est-à-dire de connecter électriquement la couche P à l'entrée du circuit de conversion 110.

Dans le mode de réalisation de l'invention présenté sur les figures., le circuit d'amplification 150 comprend :
- un amplificateur de tension 152 dont l'entrée non inverseuse (+) est à la masse, et l'entrée inverseuse (-) est électriquement connectée avec la sortie du circuit de conversion 110, et
- une résistance R_{AMP} qui est électriquement connectée entre l'entrée inverseuse (-) et la sortie de l'amplificateur de tension 152.

L'amplificateur de tension 152 est ici connecté en mode inverseur, mais il peut être en mode non-inverseur.

De même, le circuit d'amplification 150 peut être réalisé par une succession de transistors d'amplification ou tout autre système d'amplification.

Pour séparer électriquement la diode D et le circuit de conversion 110, et ainsi dépolariser complètement la diode D, le circuit électronique 100 comporte un condensateur d'entrée C_{E} intercalé entre la couche P de la diode D et le circuit de conversion 110. Ainsi la première électrode du condensateur d'entrée C_{E} est électriquement connectée à la couche P de la diode D et sa deuxième électrode est électriquement connectée à l'entrée du circuit de conversion 110.

Un tel agencement avec la diode D en polarisation directe, le circuit de conversion 110 et le condensateur d'entrée C_{E} permet de détecter des impulsions représentatives d'une interaction diode D / particule alpha qui soit plus faible que ce qui est mesuré avec un amplificateur de charge de l'état de la technique. En effet, un tel agencement permet de réduire fortement le bruit électronique du circuit d'amplification 150 et il est possible de détecter les très faibles impulsions du bruit électronique.

De la même manière, pour séparer électriquement le circuit de conversion 110 et le circuit d'amplification 150, le circuit électronique 100 comporte un condensateur de sortie C_{D} intercalé entre le circuit de conversion 110 et le circuit d'amplification 150. Ainsi la première électrode du condensateur de sortie C_{D} est électriquement connectée à la sortie du circuit de conversion 110, et sa deuxième électrode est électriquement connectée à l'entrée du circuit d'amplification 150.

Le circuit de conversion 110 comprend :
- un transistor à effet de champ ou FET 112 en auto polarisation,
- une résistance d'entrée R_{E} qui est électriquement connectée entre la masse et la grille du transistor FET 112,
- une résistance de source R_{S} qui est électriquement connectée entre la masse et la source du transistor FET 112,
- un condensateur de source C_{S} qui est branché en parallèle avec la résistance de source R_{S},
- une résistance de drain R_{D} qui est électriquement connectée entre une source de tension V_{CC} et le drain du transistor FET 112.

La deuxième électrode du condensateur d'entrée C_{E} est électriquement connectée à la grille du transistor FET 112.

La première électrode du condensateur de sortie C_{D} est électriquement connectée au drain du transistor FET 112.

L'agencement particulier du circuit de conversion 110 permet, lorsqu'une particule alpha interagit avec la couche P, la création d'un mouvement de charge au niveau de la grille du transistor FET 112, ce qui entraîne une légère modification de la tension entre la grille et la source du transistor FET 112 et engendre une variation de tension sur la résistance de drain R_{D} qui est ensuite amplifiée par le circuit d'amplification 150.

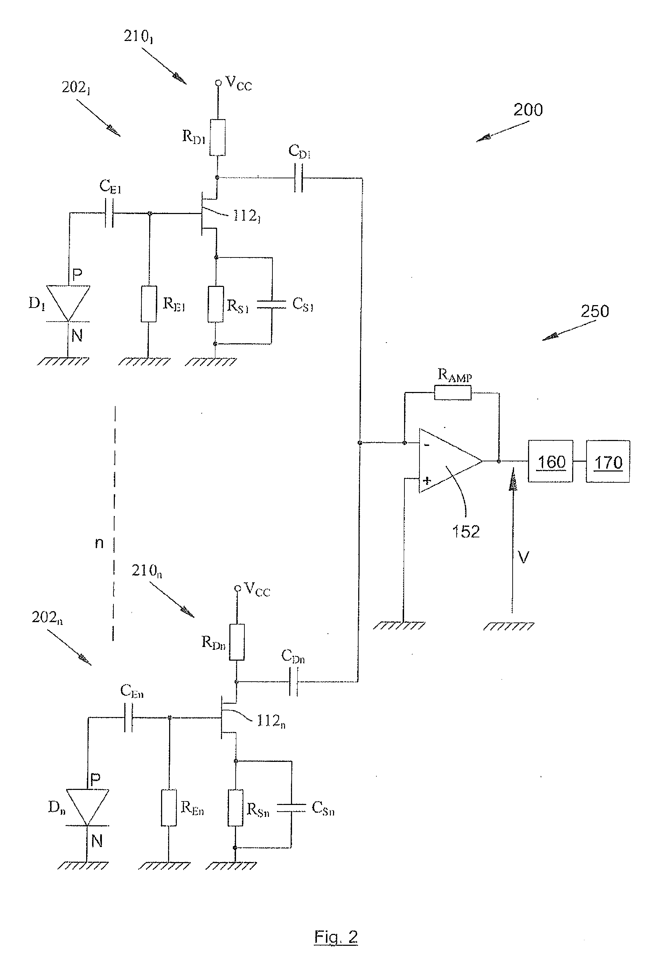

La figure 2 montre un circuit électrique 200 d'un dispositif de détection qui comporte une pluralité de cellules de détection et de conversion qui sont référencées 202₁, 202ₙ et qui sont électriquement connectées en parallèle sur l'entrée d'un circuit d'amplification 250 qui est suivi d'un circuit de comparaison 160 et d'un circuit de commande 170.

Le circuit d'amplification 250 reprend la même structure que celle du circuit d'amplification 150 du mode de réalisation de la figure 1.

Le nombre 'n' représente un entier supérieur à 2 et il représente le nombre de cellules de détection et de conversion 202₁, 202ₙ qui sont mises en place.

Le cas où 'n' est égal à 1 est représenté par le mode de réalisation de l'invention de la figure 1.

Seule la cellule de détection et de conversion 202₁ va maintenant être décrite, mais chacune des autres cellules de détection et de conversion présente une structure identique.

La cellule de détection et de conversion 202₁ comporte :
- une diode D₁ en polarisation directe, et
- un circuit de conversion 210₁ du type convertisseur charge-tension dont l'entrée est électriquement connectée à la couche P de la diode D₁ et qui est prévu pour récupérer la charge émise par la diode D₁ et pour convertir cette charge en une tension représentative.

Comme pour le mode de réalisation de la figure 1, la cellule de détection et de conversion 202₁ comporte un condensateur d'entrée C_{E1} intercalé entre la couche P de la diode D₁ et le circuit de conversion 110₁ associé, c'est-à-dire que la première électrode est électriquement connectée à la couche P de la diode D₁ et que la deuxième électrode est électriquement connectée à l'entrée du circuit de conversion 2101.

Comme pour le mode de réalisation de la figure 1, la cellule de détection et de conversion 202₁ comporte également un condensateur de sortie C_{D1} intercalé entre le circuit de conversion 110₁ et le circuit d'amplification 250, c'est-à-dire que la première électrode est électriquement connectée à la sortie du circuit de conversion 210₁, et que la deuxième électrode est électriquement connectée à l'entrée du circuit d'amplification 250.

La structure du circuit de conversion 210₁ est identique à celle du circuit de conversion 110 de la figure 1. C'est-à-dire qu'il comprend
- un transistor à effet de champ 112₁ en auto polarisation,
- une résistance d'entrée R_{E1} qui est électriquement connectée entre la masse et la grille du transistor 112₁,
- une résistance de source R_{S1} qui est électriquement connectée entre la masse et la source du transistor 112₁,
- un condensateur de source C_{S1} qui est branché en parallèle avec la résistance de source R_{S1}, et
- une résistance de drain R_{D1} qui est électriquement connectée entre une source de tension V_{CC} et le drain du transistor 112₁.

La deuxième électrode du condensateur d'entrée C_{E1} est électriquement connectée à la grille du transistor 112₁.

La première électrode du condensateur de sortie C_{D1} est électriquement connectée au drain du transistor 112₁.

Comme cela est montré dans le cas du mode de réalisation de l'invention de la figure 2, l'agencement particulier de chaque cellule de détection et de conversion 202₁, 202ₙ permet de multiplier le nombre de ces cellules pour un même circuit d'amplification 250 et ainsi d'augmenter la sensibilité du dispositif de détection 200 sans qu'il soit nécessaire d'augmenter de manière importante son volume et sa consommation électrique.

La sensibilité du dispositif de détection 200 ainsi obtenue est similaire à celle de l'appareil de radiamétrie pour un coût moindre.

Selon un mode de réalisation particulier de l'invention, le transistor 112 est un transistor référencé J 113. Les valeurs des résistances R_{D} et Rs sont comprises entre 50 kΩ et 470 kΩ et de préférence voisines de 300 kΩ. Un exemple d'amplificateur de tension 152 pouvant être utilisé est l'amplificateur de tension référencé TL031.

Bien entendu, la présente invention n'est pas limitée aux exemples et modes de réalisation décrits et représentés, mais elle est susceptible de nombreuses variantes accessibles à l'homme de l'art.

L'invention a été plus particulièrement décrite dans le cas de particules alpha issues du radon, mais elle s'applique de la même manière pour les particules alpha issues d'autres éléments.

## Revendications

1. Dispositif de détection de particules alpha, notamment issues du radon, dans un local, constitué par un circuit électronique comprenant:
- une cellule de détection et de conversion (102) ou plusieurs cellules de détection et de conversion (202₁, 202ₙ) branchées en parallèle, cette ou chacune de ces cellule(s) comportant une diode (D₁, D₂, Dₙ) en polarisation directe coopérant avec des moyens d'analyse qui délivrent un signal de dosage représentatif de la quantité de particules alpha dans le local,
- un circuit de comparaison (160) prévu pour comparer la valeur du signal de dosage obtenu en sortie de la ou des cellule(s) de détection et de conversion (102, 202₁, 202ₙ) avec une valeur de seuil, et
- un circuit de commande (170) prévu pour commander un dispositif de protection en réponse à un dépassement de la valeur de seuil par le signal de dosage,
**caractérisé en ce que**
- la couche N de la diode (D₁, D₂, Dₙ) est connectée à la masse, et
- les moyens d'analyse sont constitués par un circuit de conversion (110, 210₁, 210ₙ) du type convertisseur charge tension dont l'entrée est électriquement connectée à la couche P de la diode (D, D₁, Dₙ) de façon à récupérer la charge émise par cette diode et la convertir en une tension représentative constituant le signal de dosage,
- ce circuit de conversion (110, 210₁, 210ₙ) comprenant :
- un transistor à effet de champ (112, 112₁, 112ₙ) en auto polarisation dont la grille est électriquement connectée à la couche P de la diode (D₁, D₂, Dₙ) et dont le drain est électriquement connecté au circuit de comparaison (160),
- une résistance d'entrée (R_{E}, R_{E1}, R_{En}) électriquement connectée entre la masse et la grille du transistor (112, 112₁, 112ₙ),
- une résistance de source (R_{S}, R_{S1}, R_{Sn}) électriquement connectée entre la masse et la source du transistor (112, 112₁, 112ₙ),
- un condensateur de source (C_{S}, C_{S1}, C_{Sn}) branché en parallèle sur la résistance de source (R_{S}, R_{S1}, R_{Sn}), et
- une résistance de drain (R_{D}, R_{D1}, R_{Dn}) électriquement connectée entre une source de tension (V_{CC}) et le drain du transistor (112, 112₁, 112ₙ).

2. Dispositif de détection de particules alpha selon la revendication 1,
**caractérisé en ce qu'**
il comporte un circuit d'amplification (150, 250) électriquement connecté entre la sortie de la ou des cellule(s) de détection et de conversion (102, 202₁, 202ₙ), et l'entrée du circuit de comparaison (160).

3. Dispositif de détection de particules alpha selon l'une quelconque des revendications 1 et 2,
**caractérisé en ce que**
la ou chacune des cellule(s) de détection et de conversion (102, 202₁, 202ₙ) comprend un condensateur d'entrée (C_{E}, C_{E1}, C_{E2}) intercalé entre la couche P de la diode (D, D₁, Dₙ) et le circuit de conversion (110, 210₁, 210ₙ) associé.

4. Dispositif de détection de particules alpha selon l'une quelconque des revendications 1 à 3,
**caractérisé en ce que**
la ou chacune des cellule(s) de détection et de conversion (102, 202₁, 202n) comprend un condensateur de sortie (C_{D}, C_{D1}, C_{Dn}), intercalé entre la sortie du circuit de conversion (110, 110₁, 110ₙ) et le circuit de comparaison (160) ou le circuit d'amplification (150, 250).

## Patentansprüche

1. Vorrichtung zum Aufspüren von insbesondere von Radon stammenden Alphateilchen in einem geschlossenen Raum, bestehend aus einem elektronischen Kreis mit:
einer Aufspür- und Umwandlungszelle (102) oder mehreren parallel angeschossenen Aufspür- und Umwandlungszellen (202₁, 202ₙ), wobei diese Zelle bzw. jede dieser Zellen eine in direkter Polarisierung stehende Diode (D₁, D₂, Dₙ) aufweist,
die mit Analysemitteln mitwirkt, welche ein von der Menge der im Raum befindlichen Alphateilchen repräsentatives Dosiersignal ausgeben,
einem Vergleichskreis (160) zum Vergleich zwischen dem Wert des am Ausgang der Aufspür- und Umwandlungszelle(n) (102, 202₁, 202ₙ) erhaltenen Dosiersignals und einem Schwellwert, und
einem Steuerkreis (170) zum Ansteuern einer Schutzvorrichtung als Antwort auf ein Übertreten des Schwellwertes durch das Dosiersignal,
**dadurch gekennzeichnet, dass**
die N-Schicht der Diode (D₁, D₂, Dₙ) mit der Masse verbunden ist und
die Analysemittel aus einem Umwandlungskreis (110, 210₁, 210ₙ) vom Ladung-zu-Spannung-Typ bestehen, dessen Eingang mit der P-Schicht der Diode (D, D₁, Dₙ) elektrisch so verbunden ist, dass die von dieser Diode ausgesendete Ladung aufgenommen wird und
in eine repräsentative Spannung umgewandelt wird, die das Dosiersignal darstellt,
wobei dieser Umwandlungskreis (110, 210₁, 210ₙ) folgendes aufweist:
einen Feldeffekttransistor (112, 112₁, 112ₙ) in Selbstpolarisierung, dessen Gate elektrisch mit der P-Schicht der Diode (D₁, D₂, Dₙ) verbunden ist, und dessen Drain elektrisch mit dem Vergleichskreis (160) verbunden ist,
einen elektrisch zwischen Masse und Gate des Transistors (112, 112₁, 112ₙ) geschalteten Eingangswiderstand (R_{E}, R_{E1}, R_{En}), einen elektrisch zwischen Masse und Source des Transistors (112, 112₁, 112ₙ) geschalteten Sourcewiderstand (R_{S}, R_{S1}, R_{Sn}), einen parallel zu dem Sourcewiderstand (R_{S}, R_{S1}, R_{Sn}) geschalteten Sourcekondensator (C_{S}, C_{S1}, C_{Sn}), und
einem elektrisch zwischen einer Spannungsquelle (V_{CC}) und dem Drain des Transistors (112, 112₁, 112ₙ) geschalteten Drainwiderstand (R_{D}, R_{D1}, R_{Dn}) .

2. Vorrichtung zum Aufspüren von Alphateilchen nach Anspruch 1,
**dadurch gekennzeichnet, dass**
sie einen elektrisch zwischen dem Ausgang der Aufspür- und Umwandlungszelle(n) (102, 202₁, 202ₙ) und dem Eingang des Vergleichkreises (160) geschalteten Verstärkungskreis (150, 250) aufweist .

3. Vorrichtung zum Aufspüren von Alphateilchen nach einem der Ansprüche 1 und 2,
**dadurch gekennzeichnet, dass**
die oder jede der Aufspür- und Umwandlungszelle(n) (102, 202₁, 202ₙ) einen zwischen der P-Schicht der Diode (D, D₁, Dₙ) und dem zugehörigen Umwandlungskreis (110, 210₁, 210ₙ) zwischengeschalteten Eingangskondensator (C_{E}, C_{E1}, C_{E2}) aufweist.

4. Vorrichtung zum Aufspüren von Alphateilchen nach einem der Ansprüche 1 bis 3,
**dadurch gekennzeichnet, dass**
die oder jede der Aufspür- und Umwandlungszelle(n) (102, 202₁, 202ₙ) einen zwischen dem Ausgang des Umwandlungskreises (110, 110₁, 110ₙ) und dem Vergleichkreis (160) oder dem Verstärkungskreis (150, 250) zwischengeschalteten Ausgangskondensator (C_{D}, C_{D1}, C_{Dn}) aufweist.

## Claims

1. Device for detecting alpha particles, in particular emanating from radon, in premises, consisting of an electronic circuit comprising:
- a detection/conversion cell (102) or several detection/conversion cells (202₁, 202ₙ) connected in parallel, this or each of these cell(s) including a forward-biased diode (D₁, D₂, Dₙ) cooperating with analysis means which deliver a dosage signal representing the quantity of alpha particles in the premises,
- a comparison circuit (160) designed to compare the value of the dosage signal obtained at the output of the detection/conversion cell(s) (102, 202₁, 202ₙ) with a threshold value, and
- a control circuit (170) provided to control a protection device in response to the dosage signal exceeding the threshold value,
**characterised in that**
- the layer N of the diode (D₁, D₂, Dₙ) is grounded and
- the analysis means consist of a conversion circuit (110, 210₁, 210ₙ) of the charge voltage converter type, the input of which is electrically connected to the layer P of the diode (D, D₁, Dₙ) so as to recover the charge emitted by this diode and to convert it into a representative voltage constituting the dosage signal,
- this conversion circuit (110, 210₁, 210ₙ) comprising:
- a field-effect transistor (112, 112₁, 112ₙ) in auto-polarisation, the gate of which is electrically connected to the layer P of the diode (D₁, D₂, Dₙ) and the drain of which is electrically connected to the comparison circuit (160),
- an input resistor (R_{E}, R_{E1}, R_{En}) electrically connected between the ground and the gate of the transistor (112, 112₁, 112ₙ),
- a source resistor (R_{S}, R_{S1}, R_{Sn}) electrically connected between the ground and the source of the transistor (112, 112₁, 112ₙ),
- a source capacitor (C_{S}, (C_{S1}, C_{Sn}) connected in parallel with the source resistor (R_{S}, R_{S1}, R_{Sn}), and
- a drain resistor (R_{D}, R_{D1}, R_{Dn}) electrically connected between a voltage source (V_{CC}) and the drain of the transistor (112, 112₁, 112ₙ).

2. Device for detecting alpha particles according to claim 1,
**characterised in that**
it includes an amplification circuit (150, 250) electrically connected between the output of the detection/conversion cell(s) (102, 202₁, 202ₙ) and the input of the comparison circuit (160).

3. Device for detecting alpha particles according to either one of claims 1 and 2,
**characterised in that**
the or each of the detection/conversion cell(s) (102, 202₁, 202ₙ) comprises an input capacitor (C_{E}, C_{E1}, C_{E2}) inserted between the layer P of the diode (D₁, D₂, Dₙ) and the associated conversion circuit (110, 210₁, 210ₙ).

4. Device for detecting alpha particles according to any one of claims 1 to 3,
**characterised in that**
the or each of the detection/conversion cell(s) (102, 202₁, 202ₙ) comprises an output capacitor (C_{D}, C_{D1}, C_{Dn}) inserted between the output of the conversion circuit (110, 110₁, 110ₙ) and the comparison circuit (160) or the amplification circuit (150, 250).
